# EUROPEAN PATENT APPLICATION

(11) **EP 2 063 483 A1**
(43) Date of publication of application: **27.05.2009**
(21) Application number: 07829340.4
(22) Date of filing: 05.10.2007
(51) Int. Cl.: H01M 10/40

(54) **ELECTROLYTE SOLUTION FOR LITHIUM ION SECONDARY BATTERY**

(30) Priority: 23.10.2006 JP 2006287335
(71) Applicant: Asahi Kasei Chemicals Corporation, Tokyo 101-8101 (JP)
(72) Inventor: ISHII, Yoshiyuki, Chiyoda-ku Tokyo 100-8440 (JP)
(74) Representative: Bradley, Josephine Mary
(86) International application number: PCT/JP2007/069602
(87) International publication number: WO 2008/050599

(57) **Abstract**

The present invention provides a lithium ion secondary battery satisfactory in cycle property and an electrolyte for a lithium ion secondary battery capable of realizing the aforementioned lithium ion secondary battery, by using an electrolyte for a lithium ion secondary battery, comprising a group of additives and a solvent, and the group of additives includes (A) an additive having two or more polymerizable functional groups in the molecule thereof, and (B) an additive having one polymerizable functional group in the molecule thereof, wherein the mixing ratio between the component (A) and the component (B), in terms of component (A)/component (B) (mass ratio), is 0.01/99.99 to 99/1, and the content of the group of additives is 0.0001 % by mass to 10% by mass.

## Description

### Technical Field

The present invention relates to an electrolyte for a lithium ion secondary battery and a lithium ion secondary battery.

### Background Art

With the recent development of electronic techniques, mobile communication devices and portable computers have been widely spreading. As the power sources for such portable devices, high energy density secondary batteries are expected to be promising. In particular, a lithium ion secondary battery as a non-aqueous electrolyte secondary battery can be expected to offer high voltage, and hence can contribute to downsizing and weight reduction of devices. Additionally, lithium ion secondary batteries are promising as batteries for hybrid automobiles recently attracting attention in relation to environmental countermeasures, and hence are undergoing accelerated development.

In general, a lithium ion secondary battery has a structure in which a positive electrode and a negative electrode each mainly formed of an active material capable of intercalating and deintercalating lithium are disposed through the intermediary of a separator. The positive electrode is formed by coating a positive electrode current collector formed of aluminum or the like with a positive electrode mixture prepared by mixing LiCoO₂, LiNiO₂, LiMn₂O₄ or the like as a positive electrode active material, carbon black, graphite or the like as a conductive agent and polyvinylidene fluoride, latex, rubber or the like as a binder. The negative electrode is formed by coating a negative electrode current collector formed of copper or the like with a negative electrode mixture prepared by mixing coke, graphite or the like as a negative electrode active material and polyvinylidene fluoride, latex, rubber or the like as a binder. The separator is formed of porous polyethylene, porous polypropylene or the like, and the thickness of the separator is as thin as a few microns to a few hundreds microns. The positive electrode, the negative electrode and the separator are impregnated with an electrolyte. Examples of the electrolyte include an electrolyte prepared by dissolving a lithium salt such as LiPF₆ in an aprotic solvent such as propylene carbonate or ethylene carbonate or a polymer such as polyethylene oxide.

The capacity of such a lithium ion secondary battery tends to be decreased as charge-discharge is repeated. Lithium ion secondary batteries used in cell phones, personal computers and the like usually need to be replaced in a year or two. The property that indicates to what degree the capacity decrease is caused by repeating charge-discharge is referred to as the cycle property of a battery. A battery which undergoes a small degree of capacity decrease as a result of repeated charge-discharge is referred to as a battery having a satisfactory cycle property. In particular, batteries for hybrid automobiles recently attracting attentions as environmental countermeasures are assumed to be used under an automobile use environment such as under the scorching midsummer sun or in dry desert areas. Accordingly, it is a significant challenge how to maintain the cycle property under high temperature environment, specifically, at 60°C or higher.

For the purpose of improving the cycle property, addition of additives into the electrolyte has been investigated. In Non-Patent Document 1, Abstracts of Annual Meeting of the Electrochemical Society of Japan (Koen Yoshishu (Denki Kagakkai Taikai)), 2005, p. 293, describes that, in particular, addition of vinylene carbonate to the electrolyte forms a coating film on the surface of the negative electrode in the initial charge step, and this coating film has a function to suppress the degradation of the cycle property.
Additionally, Patent Document 1, Japanese Patent No. 3059832, describes a combination of vinylene carbonate with a solvent having a boiling point of 150°C or lower. Patent Document 2, Japanese Patent No. 3332834, describes a method in which vinylene carbonate is added in a battery that uses for the negative electrode a carbon material having a specific crystal lattice.
Yet additionally, Patent Document 3, Japanese Patent Laid-Open No. 7-192757 discloses, as an attempt to improve the storage property at 60°C, a nonaqueous electrolyte battery in which a tricarboimide selected from tris(2-hydroxyethyl) isocyanurate, triallyl cyanurate and triallyl isocyanurate is added into the electrolyte.

[Non-Patent Document 1] Abstracts of Annual Meeting of the Electrochemical Society of Japan (Koen Yoshishu (Denki Kagakkai Taikai)), 2005, p. 293
[Patent Document 1] Japanese Patent No. 3059832
[Patent Document 2] Japanese Patent No. 3332834
[Patent Document 3] Japanese Patent Application Laid-Open No. 7-192757

### Disclosure of the Invention

### Problems to be Solved by the Invention

However, room for improvement is left in any of the batteries described in above-described Non-Patent Document 1 and Patent Documents 1 to 3, from the viewpoint of improving the cycle property.
The object of the present invention is to provide a lithium ion secondary battery satisfactory in cycle property and an electrolyte for a lithium ion secondary battery capable of realizing the aforementioned lithium ion secondary battery.

### Means for Solving the Problems

The present inventors conducted a diligent study for the purpose of solving the above-described problems, and consequently perfected the present invention by discovering that a lithium ion secondary battery satisfactory in cycle property can be realized by adding a specific group of additives to a solvent.

Specifically, the present invention is as follows.
[1]
   An electrolyte for a lithium ion secondary battery, comprising a group of additives and a solvent, wherein the group of additives includes the following components (A) and (B): (A) an additive having two or more polymerizable functional groups in the molecule thereof; and (B) an additive having one polymerizable functional group in the molecule thereof, wherein the mixing ratio between the component (A) and the component (B), in terms of component (A)/component (B) (mass ratio), is 0.01/99.99 to 99/1, and the content of the group of additives is 0.0001% by mass to 10% by mass.
[2]
   The electrolyte for a lithium ion secondary battery according to [1], wherein the component (A) has an atom having a non-covalent electron pair.
[3]
   The electrolyte for a lithium ion secondary battery according to [2], wherein the component (A) has a triazine ring structure and/or an isomeric structure thereof.
[4]
   The electrolyte for a lithium ion secondary battery according to [3], wherein the component (A) is triallyl cyanurate and/or triallyl isocyanurate.
[5]
   The electrolyte for a lithium ion secondary battery according to any one of [1] to [4], wherein the component (B) is vinylene carbonate.
[6]
   A lithium ion secondary battery comprising the electrolyte for a lithium ion secondary battery according to any one of [1] to [5], a positive electrode, a negative electrode and a separator.

### Advantages of the Invention

According to the present invention, provided are a lithium ion secondary battery satisfactory in cycle property, and an electrolyte for a lithium ion secondary battery capable of realizing the aforementioned lithium ion secondary battery.

### Brief Description of the Drawing

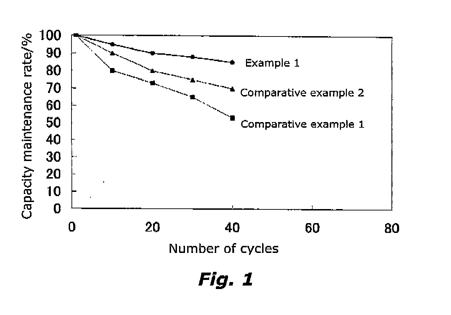

Figure 1 is a graph showing the cycle test results of the batteries obtained in Example 1, Comparative Example 1 and Comparative Example 2.

### Best Mode for Carrying Out the Invention

Hereinafter, the best mode for carrying out the present invention (hereinafter, abbreviated as "embodiment") is described in detail. It is to be noted that the present invention is not limited to the following embodiment, but may be carried out in a variety of modified forms within the scope of the gist of the present invention.

The electrolyte for a lithium ion secondary battery of the present embodiment is **characterized in that** the electrolyte includes a group of additives and a solvent, and the group of additives include the following components (A) and (B):
(A) an additive having two or more polymerizable functional groups in the molecule thereof, and
(B) an additive having one polymerizable functional group in the molecule thereof.

Examples of the polymerizable functional group contained in the component (A) or the component (B) include: unsaturated double bond groups such as a vinyl group, an allyl group, an acryl group and a methacryl group; unsaturated triple bond groups such as an acetylenyl group and a propynyl group; and monofunctional groups such as an epoxy group, a nitro group, a nitroso group and a silyl group. A plurality of types of these groups may be contained in one and the same compound. When a monofunctional group is used, it is preferable to contain two or more monofunctional groups in one molecule from the viewpoint of promoting the crosslinking reactions with other molecules.
From the viewpoint of improving the cycle property under the conditions of, for example, 60°C as well as ordinary temperature, it is preferable to contain an unsaturated double bond group in a molecule. From the above-described viewpoint, it is more preferable for the component (A) to contain two or more unsaturated double bond groups in one molecule thereof; on the other hand, it is more preferable for the component (B) to contain one unsaturated bond group in one molecule thereof.

From the viewpoint of more improving the cycle property of the obtained lithium ion secondary battery, it is preferable to use as the component (A) a compound that has an atom having a non-covalent electron pair, in particular, a compound that has a nitrogen atom. In particular, it is preferable to use as the component (A) a compound that has a triazine ring structure and/or an isomeric structure thereof.

More specific examples of the component (A) include triallyl cyanurate, triallyl isocyanurate, divinylbenzene, diallyl phthalate, a phenol novolac epoxy resin having three epoxy groups in the molecule thereof, and a cresol novolac epoxy resin having three epoxy groups in the molecule thereof. These may be used each alone or in combinations of two or more thereof.
Among these, triallyl cyanurate and/or triallyl isocyanurate is preferable from the viewpoint of more improving the cycle property.

On the other hand, more specific examples of the component (B) include vinylene carbonate, vinyl ethylene carbonate, methyl cyanate, bisphenol A epoxy resin and bisphenol F epoxy resin. These may be used each alone or in combinations of two or more thereof.
Preferable among these are cyclic carbonates having a polymerizable functional group in the molecule thereof, in particular vinylene carbonate, from the viewpoint of more improving the cycle property.

The mixing ratio between the component (A) and the component (B), in terms of component (A)/component (B) (mass ratio), is 0.01/99.99 to 99/1, preferably 0.1/99.9 to 90/10, more preferably 1/99 to 90/10 and furthermore preferably 10/90 to 50/50. It is preferable to set the mixing ratio so as to fall within the above-described ranges from the viewpoint of improving the cycle property. In particular, when the mixing ratio is 10/90 to 50/50, preferably the high-temperature cycle property (for example, the capacity maintenance rate (%) after 20 cycles at 60°C) particularly tends to be improved.
The group of additives may include additives (for example, phosphorus compounds, halogen compounds and the like capable of imparting flame retardancy) other than the component (A) and the component (B). The proportion of the total amount of the component (A) and component (B) in the group of additives is preferably 50% by mass or more, more preferably 70% by mass or more and furthermore preferably 100% by mass or less.

In the present embodiment, although the mechanism by which the high-temperature cycle property is improved by using in combination the above-described component (A) and the above-described component (B) is not clarified, it is inferred that appropriate coating of the electrode surface with the copolymerization film formed of the component (A) and the component (B) may be involved.
In other words, among the possible various mechanisms by which a lithium ion secondary battery undergoes the phenomenon of the capacity decrease occurring during repeated charge-discharge cycles, one possible mechanism to cause such capacity decrease is the phenomenon such that the solvent or the electrolyte is decomposed on the electrode surface. As a countermeasure against this phenomenon, one possible contribution to the improvement of the cycle property is such that the formation of the coating film on the electrode surface suppresses the electrode surface activity.
In this connection, a carbon material is usually used for the negative electrode of a lithium ion secondary battery, and in the case where the component to form the coating film has an atom having a non-covalent electron pair (for example, a nitrogen atom and an oxygen atom), such an atom tends to interact with the surface of the carbon material (tends to coordinate) so as to enable the coating film to be efficiently formed on the surface of the carbon material. Similarly, the coordination to the positive electrode material (usually a metal oxide) may also be expected.
Although cyclic carbonates (corresponding to the component (B) in the present embodiment) have been known to form a coating film on the electrode surface, such a coating film has been regarded as still leaving room for improvement from the viewpoint of establishing the compatibility between the activity reduction and the ion permeability of the electrode surface. In addition to the component (B) to function in this way, the use of a compound (corresponding to the component (A) in the present embodiment) that has an atom having a non-covalent electron pair in combination with the component (B) conceivably leads to the following results: the copolymerization reaction between the component (A) and the component (B) efficiently occurs on the electrode surface, and additionally, the coating film (the copolymer between the component (A) and the component (B)) formed on the electrode can establish in a higher level the compatibility between the activity reduction and the ion permeability of the electrode surface. In particular, the use of a triazine ring structure and/or an isomeric structure thereof as the component (A) is preferable because the high-temperature cycle property is made satisfactory.

On the other hand, examples of the solvent include: cyclic carbonates having no polymerizable functional group in the molecule thereof such as ethylene carbonate and propylene carbonate; chain carbonates such as methyl ethyl carbonate, dimethyl carbonate and diethyl carbonate; lactones such as gamma butyl lactone; ethers such as dimethyl ether; cyclic ethers such as tetrahydrofuran and dioxane; and acetonitrile.
Additionally, it is preferable to use as the solvent those compounds which are modified with fluorine, silicon or the like, from the viewpoint of more reduction of the solvent decomposition in the battery. These solvents may be used each alone or in combinations of two or more thereof.

As the solvent, a mixture composed of a cyclic carbonate and a chain carbonate both having no polymerizable functional group is particularly preferably used from the viewpoint of ensuring high ion conductivity. In particular, a combination between ethylene carbonate and methyl ethyl carbonate is preferable. In this combination, the mixing ratio between these two carbonates is, in terms of (ethylene carbonate)/(methyl ethyl carbonate) (mass ratio), preferably 1/9 to 9/1 and more preferably 3/7 to 7/3.

The electrolyte for a lithium ion secondary battery of the present embodiment may further include various lithium salts in addition to the above-described group of additives and the solvents. As such lithium salts, preferably used are: inorganic lithium salts such as LiPF₆, LiBF₄, LiClO₄ and LiAsF₆; and lithium imide salts such as LiN(SO₂CF₂)₂, LiN(SO₂CF₂CF₃)₂ and LiN(SO₂CF₂CHF₂)₂.
The concentration of the lithium salt in the solvent is preferably 0.1 to 2 mol/L.

The proportion of the group of additives in the electrolyte for a lithium ion secondary battery is 0.0001% by mass to 10% by mass, preferably 0.001% by mass to 10% by mass and more preferably 0.01% by mass to 5% by mass. The proportion thus specified to fall within such a range can contribute to the improvement of the cycle property at high temperatures.

The lithium ion secondary battery of the present embodiment is formed by using the above-described electrolyte for a lithium ion secondary battery. Examples of the other constituent members to form such a lithium ion secondary battery include a positive electrode, a negative electrode and a separator. As the positive electrode, a metal oxide active material can be used. Examples of the metal oxide active material include LiCoO₂, LiMn₂O₄, LiNiO₂, LiNi_{1/3}Mn_{1/3}Co_{1/3}O₂, LiNiₓCo₁₋ₓO₂ and LiFePO₄. The metal oxide active materials may be used each alone or as mixtures of two or more thereof.
The average particle size of the metal oxide active material is preferably 0.1 µm to 100 µm and more preferably 1 µm to 10 µm. It is to be noted that "the average particle size" as referred to in the present embodiment means a value measured according to the measurement method in below-described Examples.

The positive electrode is prepared for example as follows: a positive electrode mixture is prepared by adding, where necessary, a conductive additive, a binder and the like to the active material to be mixed therewith; a positive electrode mixture-containing paste is prepared by dispersing the positive electrode mixture in a solvent; the positive electrode mixture paste is applied to the positive electrode current collector formed of an aluminum foil or the like and then dried to form a positive electrode mixture layer; and then, where necessary, the positive electrode mixture layer is pressed to regulate the thickness thereof and thus the positive electrode is prepared.
In this connection, the solid content concentration in the paste is preferably 30 to 80% by mass and more preferably 40 to 70% by mass.

On the other hand, for the negative electrode, a carbonaceous material is preferably used as an active material thereof. More specifically, preferably used are, for example, graphite, pyrolytic carbons, cokes, glassy carbons, burned products of organic polymer compounds, mesocarbon microbeads, carbon fiber, activated carbon, graphite and carbon colloid.
The carbonaceous materials may be used each alone or as mixtures of two or more thereof.
The average particle size of such a carbonaceous material is preferably 0.1 µm to 100 µm and more preferably 1 µm to 10 µm.

The negative electrode is prepared for example as follows: a negative electrode mixture is prepared by adding, where necessary, a conductive additive, a binder and the like to the negative electrode active material, formed of the carbonaceous material, to be mixed together; a negative electrode mixture-containing paste is prepared by dispersing the negative electrode mixture in a solvent; the negative electrode mixture-containing paste is applied to the negative electrode current collector and then dried to form a negative electrode mixture layer; and then, where necessary, the negative electrode mixture layer is pressed to regulate the thickness thereof and thus the negative electrode is prepared.
In this connection, the solid content concentration in the paste is preferably 30 to 80% by mass and more preferably 40 to 70% by mass.

Examples of the conductive additive used where necessary in the preparation of the positive electrode and the negative electrode include graphite, acetylene black, carbon black, ketjen black and carbon fiber. Examples of the binder include PVDF, PTFE, polyacrylic acid, styrenebutadiene rubber and fluoro-rubber.
The average particle size of such a conductive additive is preferably 0.1 µm to 100 µm and more preferably 1 µm to 10 µm.

The positive electrode and the negative electrode are wound around each other with a separator interposed therebetween to form a laminate having a wound-around structure, or alternatively, folded or laminated as a plurality of layers to form a laminate, so as to be fabricated as a battery. The electrolyte of the present embodiment is poured into the inside of the battery, then the battery is sealed to prepare, and thus the lithium ion secondary battery of the present embodiment can be formed. The battery form of the lithium ion secondary battery of the present embodiment is not limited to specific forms, and preferably used are a cylindrical form, an oval form, a rectangular cylindrical form, a button form, a coin form, a flat form, a laminate form and the like.

### Examples

Next, the present embodiment is described more specifically with reference to Examples and Comparative Examples, but the present embodiment is not limited to following Examples as long as the present embodiment does not exceed the gist thereof. It is to be noted that the physical properties in Examples were measured by the following methods.

(i) Average particle size
   The average particle size measurement was conducted by using a dry disperser RODOS (trade mark) and a laser diffraction particle size analyzer HEROS-BASIS/KA (trade mark) both manufactured by Sympatec, Inc. As the average particle size, a particle size value at 50% cumulation was adopted.
(ii) Initial charge efficiency and capacity maintenance rate (cycle test)
   The initial charge and the charge-discharge cycle test were carried out by using a charge-discharge unit HJ-201 B manufactured by Hokuto Denki Corporation and a constant-temperature bath PU-2K manufactured by TABAI ESPEC Corporation. The initial charge was conducted at a constant current of 0.67 mA, and after the voltage reached 4.2 V, charge was conducted at a constant voltage of 4.2 V for 8 hours in total. Thereafter, discharge was conducted at a constant current of 0.67 mA until the voltage reached 3.0 V. The initial charge efficiency was derived by dividing the capacity at the initial discharge by the capacity at the initial charge. It is to be noted that the initial charge-discharge was conducted at room temperature. The conditions for the charge-discharge cycle test were such that charge was conducted at a constant current of 2 mA, and after the voltage reached 4.2 V, charge was conducted at a constant voltage of 4.2 V for 3 hours in total. Thereafter, discharge was conducted at a constant current of 10 mA, and when the voltage reached 3.0 V, charge was repeated. One cycle means that charge and discharge are each conducted once. The ambient temperature for the battery was set at 60°C. The capacity maintenance rate was a rate defined in relation to the initial capacity assumed to be 100%.
(iii) Evaluation of electrode surface
   A battery having been subjected to the cycle test was disassembled in an argon box to take off the electrodes. The electrodes were washed with ethanol (the electrolyte was washed off), then dried, and subjected to the analysis of the elements present on the electrode surface with an X-ray photoelectron spectrometer (ESCALAB 250) manufactured by Thermo Fisher Scientific Inc. It is to be noted that the X-ray photoelectron spectroscopic measurement enables to measure the relative element concentrations for the elements other than hydrogen in the superficial layer (a few nanometers) of the surface.

### [Production example 1]

### (Preparation of a positive electrode)

Lithium cobaltate (LiCoO₂) of 5 µm in average particle size as a positive electrode active material, a carbon powder of 3 µm in average particle size as a conductive additive and polyvinylidene fluoride (PVdF) as a binder were mixed together in a mass ratio of 85:10:5. Into the mixture thus obtained, N-methyl-2-pyrrolidone was added to be mixed with the mixture to prepare a slurry solution so as for the solid content in the slurry solution to be 60% by mass. The slurry thus prepared was applied to one side of a 20-µm-thick aluminum foil, subjected to solvent drying, and then rolled with a roll press. Thereafter, the thus treated aluminum foil was punched out into a disc of 16 mm in diameter.

### [Production example 2]

### (Preparation of a negative electrode)

Mesocarbon microbeads of 5 µm in average particle size as a negative electrode active material and a diene binder (glass transition temperature: - 5°C, dry particle size: 120 nm, dispersion medium: water, solid content concentration: 40%) as a binder were mixed together to prepare a slurry solution so as for the solid content concentration of the negative electrode active material to be 60% by mass. The slurry thus prepared was applied to one side of a 10-µm-thick copper foil, subjected to solvent drying, and then rolled with a roll press. Thereafter, the thus treated copper foil was punched out into a disc of 16 mm in diameter.

### [Examples 1 to 5 and Comparative Examples 1 to 4]

### Electrolytes were prepared according to the compositions shown in Table 1 presented below.

In each of Examples 1 to 5 and Comparative Examples 1 to 4, the positive electrode and the negative electrode respectively prepared in the preparation examples 1 and 2 were superposed with each other through the intermediary of a separator (film thickness: 25 µm, porosity: 50%, pore size: 0.1 µm to 1 µm) formed of polyethylene, the thus superposed members were inserted into a disc-shaped SUS battery can, then 1 ml of the concerned electrolyte that contained the above-described group of additives was poured into the battery can, and the battery can was sealed to prepare a battery.
The batteries thus obtained were each subjected to the cycle test to measure the capacity maintenance rate. The results thus obtained are also listed in Table 1 presented below. The capacity maintenance rate variations in Example 1 and Comparative Examples 1 and 2 are collectively shown in Figure 1.

**[Table 1]**

| % by mass | Examples | | | | | Comparative Examples | | | |
|---|---|---|---|---|---|---|---|---|---|
| | 1 | 2 | 3 | 4 | 5 | 1 | 2 | 3 | 4 |
| (A) VC | 0.5 | 0.9 | 0.8 | 0.5 | 0.25 | 0 | 1 | 1 | 0 |
| (B) TAIC or TAC | 0.2 (TAIC) | 0.1 (TAC) | 0.2 (TAC) | 0.5 (TAC) | 0.75 (TAC) | 0 | 0 | 0 | 1 (TAC) |
| Solution 1 | 99 | 99 | 99 | 99 | 99 | 100 | 99 | 99 | 99 |
| Initial charge efficiency (%) | 86 | - | - | - | - | 85 | 81 | - | - |
| Capacity maintenance rate variation | Figure 1 | - | - | - | - | Figure 1 | Figure 1 | - | - |
| Capacity maintenance rate (%) after 20 cycles | - | 89 | 90 | 86 | 85 | - | - | 80 | 80 |
| Evaluation of electrode surface | Mixing-in of TAIC | - | - | - | - | - | - | - | - |

(VC): Vinylene carbonate
(TAC): Triallyl cyanurate
(TAIC): Triallyl isocyanurate
(Solution 1): A solution prepared as follows: a mixed solvent of ethylene carbonate and methyl ethyl carbonate was prepared in a mixing mass ratio of 1:2; then LiPF₆ was dissolved in the mixed solvent so as to give a LiPF₆ concentration of 1 mol/L.
(Mixing-in of TAIC)
   Both for the positive electrode and for the negative electrode, about 4 atom% (the relative element concentrations for the elements other than hydrogen in the superficial layer (a few nanometers)) of the nitrogen originating from triallyl isocyanurate was detected, to verify that triallyl isocyanurate was incorporated into the electrode surface coating film.
   As can be seen from the results shown in Table 1, the lithium ion secondary batteries of the present embodiment were all 85% or more in the capacity maintenance rate at a high temperature (60°C) after 20 cycles and were all satisfactory in cycle property.
   Also, as can be seen from the results of Figure 1, the lithium ion secondary battery of the present embodiment was suppressed in the capacity decrease from the initial stage of the cycle test and satisfactory in cycle property.

## Claims

1. An electrolyte for a lithium ion secondary battery, comprising a group of additives and a solvent,
wherein the group of additives includes the following components (A) and (B):
(A) an additive having two or more polymerizable functional groups in the molecule thereof; and
(B) an additive having one polymerizable functional group in the molecule thereof,
wherein the mixing ratio between the component (A) and the component (B), in terms of component (A)/component (B) (mass ratio), is 0.01/99.99 to 99/1, and
the content of the group of additives is 0.0001 % by mass to 10% by mass.

2. The electrolyte for a lithium ion secondary battery according to claim 1, wherein the component (A) has an atom having a non-covalent electron pair.

3. The electrolyte for a lithium ion secondary battery according to claim 2, wherein the component (A) has a triazine ring structure and/or an isomeric structure thereof.

4. The electrolyte for a lithium ion secondary battery according to claim 3, wherein the component (A) is triallyl cyanurate and/or triallyl isocyanurate.

5. The electrolyte for a lithium ion secondary battery according to any one of claims 1 to 4, wherein the component (B) is vinylene carbonate.

6. A lithium ion secondary battery comprising the electrolyte for a lithium ion secondary battery according to any one of claims 1 to 5, a positive electrode, a negative electrode and a separator.
